# EUROPÄISCHE PATENTSCHRIFT

(11) **EP 0 470 396 B1**
(45) Veröffentlichungstag und Bekanntmachung des Hinweises auf die Patenterteilung: **27.09.1995**
(21) Anmeldenummer: 91111722.4
(22) Anmeldetag: 13.07.1991
(51) Int. Cl.: B29C 39/10, B29C 45/14, C07F 7/22

(54) **Giessform**
Mould
Moule

(30) Priorität: 07.08.1990 DE 4024946
(43) Veröffentlichungstag der Anmeldung: 12.02.1992
(73) Patentinhaber: Delphi Automotive Systems Deutschland GmbH, D-42369 Wuppertal (DE)
(72) Erfinder: Lindenbach, Andreas, Dipl.-Ing., W-5800 Hagen 1 (DE)
(74) Vertreter: Priebisch, Rüdiger

(56) Entgegenhaltungen:
- WO-A-87/04973
- DE-B- 1 913 322
- US-A- 4 405 083
- US-A- 4 461 736
- US-A- 4 743 188

## Beschreibung

Die Erfindung betrifft eine Gießform aus einem Ober- und Unterteil zur Herstellung von Umhüllungen für Leitungsbündel, insbesondere Umhüllungen aus Kunststoff oder dergleichen für Kabelsätze, mit mindestens einem Einsatz zur Abdichtung des austretenden Leitungsbündels, der aus einem flexiblen Material besteht.

Es ist bekannt, in Gießformen aus einem Ober- und Unterteil Umhüllungen, z. B. Tüllen, für Leitungsbündel herzustellen. Das Leitungsbündel wird in die Gießform eingelegt, und die anschließend eingeleiteten Gießmaterialien bilden nach einer materialspezifischen Standzeit eine Umhüllung, gemäß dem Formhohlraum. Üblicherweise werden die Leitungsbündel aus Einzeladern in Handarbeit oder teilweise maschinell gefertigt. Dabei ändern sich sowohl Form als auch Durchmesser von Bündel zu Bündel auf Grund der unterschiedlichen Anzahl bzw. Durchmesser der einzelnen Leitungen. Deshalb ist die Abdichtung der Gießform an den Austrittstellen des Bündels schwierig. Je nach Form und Durchmesser wird das Bündel mittels Bandagen einer größeren Gießform angepaßt oder in eine andere kleinere Gießform eingelegt. Diese Art der Kabelsatzfertigung ist teuer und zeitaufwendig, da entweder mehrere Gießformen hergestellt und eingesetzt werden, oder zusätzliche Kosten für Bandierungen entstehen, um dem qualitativen Anforderungen gerecht zu werden. Weiterhin werden Gießformen mit Einsätzen unterschiedlichster Art ausgestattet, um in ein und der selben Form mehrere Varianten eines Gießteiles herstellen zu können.

Die DE-B-1913322 zeigt eine Spritzgießform zur Herstellung elektrischer Verbindungselemente durch Umspritzen elektrischer Leitungen mit Kunststoff. Die Leitung wird in eine Öffnung der Spritzgießform eingelegt. Ein zweiteiliger Einsatz umschließt die in der Öffnung der Spritzgießform angeordnete Leitung und verhindert, daß Spritzmaterial aus der Form austritt. Die identisch ausgebildeten Hälften des Einsatzes sind mit parallel verlaufenden Dichtflächen ausgeführt, die nach dem Einlegen der Leitung komprimiert werden. Es wird ausschließlich die Elastizität des Einsatzmaterials zur Abdichtung unterschiedlicher Leiterkonfigurationen genutzt. Eine solche Abdichtung kann nicht auf ein einer größeren Durchmesserschwankung unterliegendes Leitungsbündel übertragen werden. Es ist nicht möglich, die durch das eingelegte Leitungsbündel verursachte Quetschung des Einsatz ohne Einlegeöffnung abzufangen. Der Einsatz verändert seine Form. Folglich entstehen undichte Stellen.

Aus der US-A-4405083 ist eine Spritzgießform bekannt, in der Kabelverbindungen umspritzt werden, wobei das aus der Gießform austretende Kabel mittels eines Einsatzes gehalten und abgedichtet wird. Der Einsatz besteht aus zwei identischen Hälften, deren halbkreisförmige Öffnungen nach dem Zufahren der Spritzgießform das Kabel vollständig umschließen. Um das Kabel sowohl abzudichten als auch hinreichend zu fixieren, ist der Einsatz aus abwechselnd aneinander befestigten Scheibenringen verschiedener Größen aufgebaut. Erste Scheibenringe mit einem kleinen Innendurchmesser dienen hauptsächlich der Fixierung des Kabels, während zweite Scheibenringe mit großem Innendurchmesser die Abdichtung des Kabels gewährleisten. Ein Kabel, das in dem Einsatz gehalten wird, verursacht eine nach außen gerichtete radiale Kompression der ersten Scheibenringe, die von den benachbarten Scheibenringen abgefangen werden. Die abdichtende Wirkung erfährt das Kabel durch die zweiten Scheibenringe. Die eigentliche Dichtfläche ist ihrem Durchmesser konstant und hat eine zylindrische Form, da die ersten Scheibenringe auf das Maß des Innendurchmessers der zweiten Scheibenringe zurückgedrückt werden. Die Flexibilität des Einsatzmaterials ermöglicht in geringem Maße die Verwendung des Einsatzes bei variierenden Kabeldurchmessern. Darüber hinaus wird darauf hingewiesen, daß für Leitungsbündel mit unterschiedlichem Durchmesser der Austausch des Einsatzes erforderlich ist.

Aufgabe der Erfindung ist es, eine Gießform zu schaffen, in der Umhüllungen für Leitungsbündel, insbesondere Umhüllungen aus Kunststoff oder dergleichen für Kabelsätze, mit unterschiedlichen Durchmessern hergestellt werden können, wobei die Abdichtung des austretenden Leitungsbündels gewährleistet wird.

Gelöst wird diese Aufgabe mit den im kennzeichnenden Teil des Anspruches 1 angegebenen Merkmalen.

Eine Gießform nach der Erfindung ermöglicht, Umhüllungen für Leitungsbündel mit unterschiedlichen Durchmessern herzustellen, da der Einsatz aus einem begrenzt flexiblen Material besteht und damit Durchmesser und Formschwankungen des Leitungsbündels innerhalb einer Fertigungsreihe ausgeglichen werden. Durch den Einsatz in der Gießform ist es möglich, die Leitungen nach dem Bündeln ohne Zwischenschritt (Bandierung) dort einzulegen und weiter zu verarbeiten. Die Materialeigenschaften des Einsatzes gewährleisten einerseits an den Austrittstellen des Leitungsbündels eine einwandfreie Abdichtung der Gießform; andererseits paßt sich der Einsatz unterschiedlichen Bündelgrößen an.

Im Gegensatz zum bisherigen Arbeitsablauf kann in einer erfindungsgemäßen Gießform eine Umhüllung von unterschiedlichen Bündeln erfolgen. Anhand von vorab ermittelten Maximal- und Minimal-Durchmessern des Leitungsbündels wird der Einsatz ausgelegt, um alle Unregelmäßigkeiten, die zur Undichtigkeit der Anordnung an den Austrittsstellen führen können, abzufangen. Je nach Art und Aufbau des Leitungsbündels muß das Material des Einsatzes eine Shore-A-Härte zwischen 60 und 90 aufweisen.

Unterhalb einer Shore-A-Härte von 60 ist das Material zu weich, d. h., durch den Druck und die Gießgeschwindigkeit würde das Gießmaterial am Einsatz vorbei aus der Form herausgepreßt. Oberhalb einer Shore-A-Härte von 90 ist das Material zu hart, das zu große Leitungsbündel wird beschädigt, oder infolge der ungenügenden Flexibilität verbleiben Lücken, durch die das Gießmaterial aus der Gießform austreten kann.

Das bisherige Aufbandieren zur Anpassung des Außendurchmessers an die Maße der Gießform entfällt und damit auch der Zeitaufwand und die Materialkosten für die Bandierung. Es wird nur noch eine einzige Gießform benötigt, in die - je nach Art und Durchmesser der zu fertigenden Bündelserie - ein entsprechender Einsatz eingelegt wird, sofern die Form der Umhüllung an sich gleich bleibt. Daraus resultieren geringe Werkzeugkosten und schnelle Umstellungen auf neue Produktserien.

Um das Lösen aus der Gießform zu erleichtern, wird der Einsatz aus einem Material mit geringer Haftneigung bezüglich der Gießform gefertigt. Dadurch erübrigen sich Trennmittel, z. B. spezielle Trennflüssigkeiten, die zusätzliche Kosten verursachen und das Gießverfahren erschweren.

Die vorhergenannten Bedingungen werden durch den Werkstoff Silikon erfüllt, denn es ist flexibel und zeichnet sich durch eine geringe Haftneigung aus. Da es zusätzlich wärmebeständig ist, bietet sich seine Verwendung als Material für den Einsatz besonders an. In einer Presse wird das Silikon in einem entsprechenden Rahmen in die notwendige Form gebracht und kann danach in die Gießform eingelegt werden.

Es besteht die Möglichkeit, den Einsatz ein- oder mehrteilig auszubilden. Der einteilige Einsatz wird entweder in das Ober- oder Unterteil der Gießform eingesetzt und anschließend mit dem Leitungsbündel bestückt. Ein mehrteiliger Einsatz besteht vorteilhafterweise aus zwei identischen Teilen, die jeweils in Ober- und Unterteil der Gießform eingelegt werden, so daß das Leitungsbündel beim Zusammensetzen der Gießform zwischen diesen Hälften des Einsatzes gehalten wird. Dadurch liegt das Bündel längsaxial in der Gießform und kann gleichmäßig von dem Gießmaterial eingeschlossen werden.

Die Form des Einsatzes muß auf die der Gießform abgestimmt sein, um Undichtigkeiten zu vermeiden. Außerdem muß der Einsatz so gestaltet sein, daß er den nach außen gerichteten Druck des jeweils größtmöglichen Leitungsbündels aufnehmen kann, ohne instabil zu werden. Erreicht wird dies durch die Gestaltung des Einsatzes, d. h., er nimmt ohne wesentliche Veränderung der Außenkontur alle Verquetschungen in sich auf. Der Einsatz ist deshalb kompakt gebaut, wobei dünne und längliche Ausbildungen zu vermeiden sind. Durch die Aufnahme in die harte Gießform erhält der Einsatz zusätzliche Stabilität.

Gemäß Anspruch 7 ist der Einsatz an der äußeren Randfläche teilweise konvex geformt, da es fertigungstechnisch am einfachsten ist, die entsprechenden Räume für den Einsatz in der Gießform auszufräsen. Dabei ist es günstig, die Randfläche abzurunden. Es ist von Vorteil, den Einsatz an der inneren Randfläche wie einen Trichter auszubilden, der mit seinem größeren Durchmesser zur Form zeigt. So ist es möglich, Leitungsbündel mit großen und kleinen Durchmessern oder den unterschiedlichsten Formabweichungen dicht zu umhüllen. Der kleinste Trichterdurchmesser entspricht dem kleinsten Bündeldurchmesser und der größte Trichterdurchmesser den größten Bündeldurchmesser einer Serie. Das Verhältnis Größt- zu Kleinstdurchmesser sollte zwei zu eins nicht überschreiten, da der Einsatz sonst zu dünnflächig und instabil wird und das einfließende Gießmaterial den Einsatz zur Seite drücken und aus der Gießform herausquellen würde.

Eine Gießform gemäß Anspruch 8 erhöht die Dichtwirkung des Einsatzes, indem der Trichter mit kreisförmig verlaufenden Erhöhungen und/oder Vertiefungen ausgebildet wird und so das Gießmaterial mit mehreren Dichtlippen am Ausfließen hindert.

Die erfindungsgemäße Gießform findet Verwendung bei Verfahren, bei denen das Gießmaterial aufgeschäumt wird, z. B. bei der Verarbeitung von PUR im sogenannten RIM-Verfahren. Beim letztgenannten Verfahren laufen zwei Gießmaterialien in die Gießform ein und reagieren miteinander, wobei sich ein Schaumkörper bildet. Beim RIM-Verfahren entsteht aus Polyol und Isocyanat PUR, das in der Form sein Volumen vergrößert und Wärme freisetzt. Die einfließenden Materialien sind so bemessen, daß das aufschäumende PUR die Gießform komplett ausfüllt und die Umhüllung um das Leitungsbündel bildet. Da während des Verfahrens mit relativ geringen Drücken gearbeitet wird, ist es möglich, einen flexiblen Einsatz zur Abdichtung der unterschiedlich großen Leitungsbündel zu benutzen. Das in Anspruch 3 genannte Silikon ist für Arbeitstemperaturen um 105 °C, wie hier üblich, und damit für das PUR-Schäumen bestens geeignet.

In den nachfolgenden Zeichnungen ist die Erfindung anhand eines Ausführungsbeispieles näher beschrieben.
- Figur 1: zeigt das Unterteil einer Gießform gemäß der Erfindung mit in untere Einsatzhälften eingelegtem Leitungsbündel in Draufsicht.
- Figur 2: zeigt eine Gießform gemäß der Erfindung mit in Einsätze eingelegtem Leitungsbündel im Querschnitt.
- Figur 3: zeigt eine untere Einsatzhälfte eines zweiteiligen Einsatzes in Draufsicht.
- Figur 4a bis 4e: zeigen verschiedene Ausführungsbeispiele der Dichtflächen des Einsatzes.

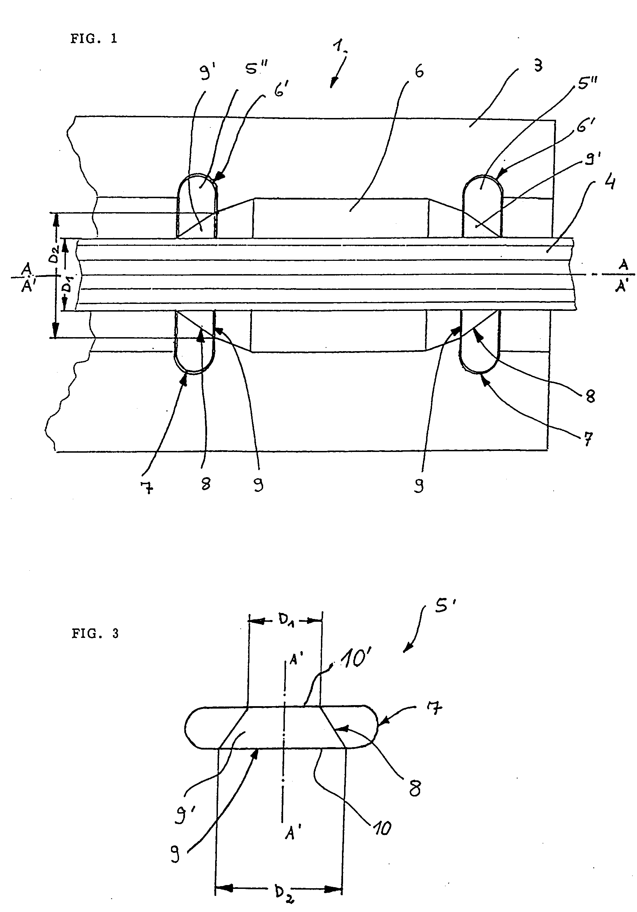

In der Figur 1 ist auszugsweise die Draufsicht eines Unterteiles 3 einer erfindungsgemäßen Gießform 1 dargestellt. Dort sind zwei untere Einsatzhälften 5'' und das zu umhüllende Leitungsbündel 4 eingelegt. Die beiden unteren Einsatzhälften 5'' schließen den Formhohlraum 6 ab. Das in den Formhohlraum 6 später einzuspritzende Material bildet eine Umhüllung des Bündels 4. Die unteren Einsatzhälften 5'' befinden sich an den beiden Enden der Gießform 1 in dafür vorgesehenen Hohlräumen 6'. Die äußeren Randflächen 7 der unteren Einsatzhälften 5'' sind konvex ausgebildet und passen formschlüssig in entsprechende Ausnehmungen 6' der Gießform 1. In jeder unteren Einsatzhälfte 5'' ist an der dem Bündel 4 zugewandten Randfläche 8 eine Trichterfläche 9' eingeformt, so daß deren Längsachse A'- A' mit der Längsachse A - A der Gießform 1 übereinstimmt. Der kleinere Durchmesser D₁ des Trichters 9 weist jeweils aus der Gießform 1 heraus und dichtet das Bündel 4 einer Fertigungsreihe an beiden Enden ab. Mit einer Einsatzgröße ist es möglich, das Bündel 4 bis zum Größtdurchmesser D₂ des Trichters 9 zu umspritzen. Die durch große Bündel 4 hervorgerufenen Drücke auf einen trichterförmigen Einsatz 5 verteilen sich so, daß der Trichter 9 sich noch enger an das Bündel 4 drückt und es abdichtet.

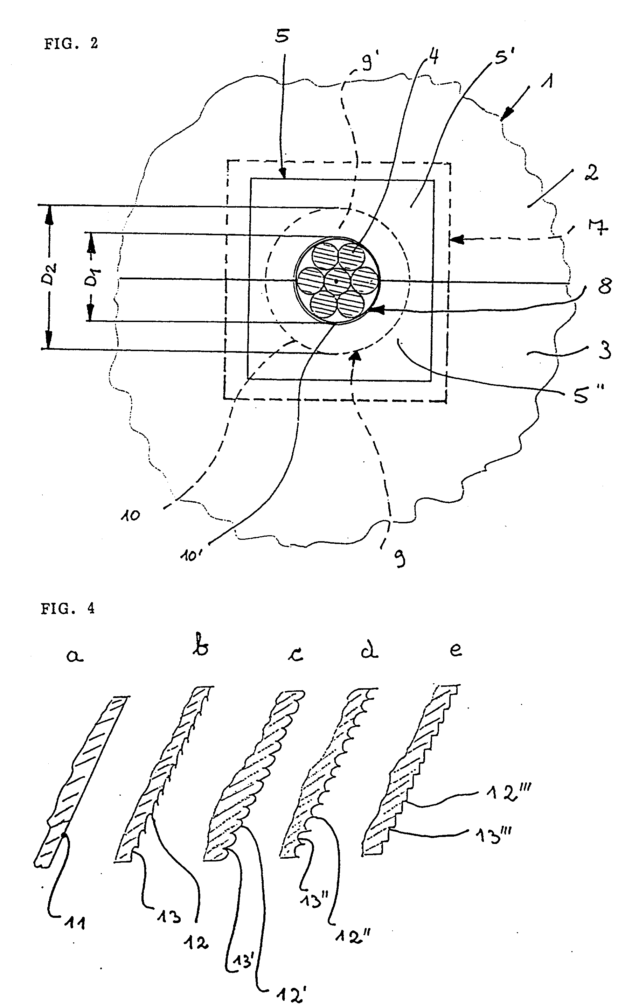

In Figur 2 ist die Gießform 1, bestehend aus Oberteil 2 und Unterteil 3, mit einem in eine obere Einsatzhälfte 5' und eine untere Einsatzhälfte 5'' eingesetzten Leitungsbündel 4 dargestellt. Die identischen Einsatzhälften 5', 5'' sind rechteckig mit zwei unterschiedlich großen halbkreisförmigen Einbuchtungen 10, 10' ausgeführt, die ihren Mittelpunkt auf der Längsachse A' - A' haben. Diese beiden Einbuchtungen 10, 10' sind mittig in der inneren Randfläche 8 des Einsatzes 5 angeordnet. Die untere Einsatzhälfte 5'' wird von einer oberen Einsatzhälfte 5' zu einem Trichter 9 ergänzt.

Die Figur 3 läßt erkennen, daß die äußeren Randflächen 7, hier der unteren Einsatzhälfte 5'', konvex geformt sind, um in den Ausnehmungen 6' der Gießform 1 einen formschlüssigen Sitz zu erzielen. Die beiden Einbuchtungen 10, 10' bilden eine Trichterfläche 9'. Die Kleinstdurchmesser D₁ und der Größtdurchmesser D₂ des Trichters 9 werden gemäß der zu erwartenden Größendifferenz der Leitungsbündel 4 bemessen.

Die dem Bündel 4 zugewandten inneren Randflächen 8 können je nach Anforderung an die Abdichtung oder an das Design der Umhüllung mit einer glatten Oberfläche 11 oder mit kreisförmig verlaufenden Erhöhungen 12 und/oder Vertiefungen 13 versehen werden. Diese Strukturen verlaufen kreisförmig um die Längsachse A' - A' des Einsatzes 5 bzw. A - A der Gießform 1. Verschiedene Ausführungsmöglichkeiten sind in den Figuren 4a bis 4e dargestellt.

Ausführung 4a zeigt eine glatte Ausgestaltung 11, die Ausführungen 4b bis 4e zeigen aufgerauhte oder gegliederte Flächen, die verschiedene Formen aufweisen können. Dabei verlaufen Dichtlippen, Dichtwülste oder dergleichen 12 bis 12''' neben entsprechenden Vertiefungen 13 bis 13''' kreisförmig zwischen dem größten Durchmesser D₂ und dem kleinsten Durchmesser D₁ des Trichters 9, siehe Figur 3.

### Bezugszeichenliste

- 1: Gießform
- 2: Oberteil
- 3: Unterteil
- 4: Leitungsbündel
- 5: Einsatz
- 5': obere Einsatzhälfte
- 5'': untere Einsatzhälfte
- 6: Formhohlraum
- 6': Ausnehmung
- 7: äußere Randfläche
- 8: innere Randfläche
- 9: Trichter
- 9': Trichterfläche
- 10, 10': Einbuchtung
- 11: glatte Oberfläche
- 12, 12', 12'', 12''': Erhöhung, Dichtlippe, Dichtwulst
- 13, 13', 13'', 13''': Vertiefung
- D₁: kleiner Durchmesser von 9
- D₂: großer Durchmesser von 9
- A - A: Längsachse von 1
- A' - A': Längsachse von 5

## Patentansprüche

1. Gießform aus einem Oberteil (2) und einem Unterteil (3) zur Herstellung von Umhüllungen für Leitungsbündel (4), insbesondere Umhüllungen aus Kunststoff oder dergleichen für Kabelsätze, mit mindestens einem Einsatz (5) zur Abdichtung des austretenden Leitungsbündels (4), der aus einem flexiblen Material besteht, dadurch gekennzeichnet, daß das Material eine Shore-A-Härte zwischen 60 und 90 aufweist, und daß der Einsatz (5), an der dem Bündel (4) zugewandten inneren Randfläche(n) (8) als Trichter (9) ausgebildet ist.

2. Gießform nach Anspruch 1, dadurch gekennzeichnet, daß das Material bezüglich der Gießform (1) eine geringe Haftneigung hat.

3. Gießform nach Anspruch 1 oder 2, dadurch gekennzeichnet, daß der Einsatz (5) aus Silikon besteht.

4. Gießform nach einem der Ansprüche 1 bis 3, dadurch gekennzeichnet, daß der Einsatz (5) einteilig ist.

5. Gießform nach einem der Ansprüche 1 bis 3, dadurch gekennzeichnet, daß der Einsatz (5) aus zwei identischen Einsatzhälften (5', 5'') zusammengesetzt ist.

6. Gießform nach einem der Ansprüche 1 bis 5, dadurch gekennzeichet, daß der Einsatz (5) formschlüssig in eine Ausnehmung (6') der Gießform (1) einsetzbar ist.

7. Gießform nach Anspruch 6, dadurch gekennzeichent, daß der Einsatz (5) an den der Gießform (1) zugewandten äußeren Randflächen (7) konvex ausgebildet ist.

8. Gießform nach einem der Ansprüche 1 bis 7, dadurch gekennzeichnet, daß die innere(n) Randfläche(n) (8) kreisförmig verlaufende Erhöhungen (12) und/oder Vertiefungen (13) aufweist bzw. aufweisen.

9. Verwendung einer Gießform nach einem der Ansprüche 1 bis 8 bei der Durchführung des sogenannten RIM-Verfahrens zur Herstellung von geschäumten Kunststoff-Umhüllungen.

## Claims

1. A casting mould comprising an upper part (2) and a lower part (3) for manufacturing sheaths for conductive bundles (4), in particular sheaths made of plastics or the like for cable sets, having at least one insert (5) for sealing the emerging conductive bundle (4), the said insert (5) comprising a flexible material, characterised in that the material has a Shore A hardness between 60 and 90 and in that the insert (5), on the inner lateral surface(s) (8) facing the bundle (4), is formed as a funnel (9).

2. A casting mould according to claim 1, characterised in that the material has a low adhesive tendency towards the casting mould (1).

3. A casting mould according to claim 1 or 2, characterised in that the insert (5) is made of silicone.

4. A casting mould according to any one of claims 1 to 3, characterised in that the insert (5) is in one piece.

5. A casting mould according to any one of claims 1 to 3, characterised in that the insert (5) is composed of two identical insert halves (5', 5'').

6. A casting mould according to any one of claims 1 to 5, characterised in that the insert (5) is positively insertable into a recess (6') of the casting mould (1).

7. A casting mould according to claim 6, characterised in that the insert (5) is convexly formed on the outer lateral surfaces (7) facing the casting mould (1).

8. A casting mould according to any one of claims 1 to 7, characterised in that the inner lateral surface(s) (8) has/have elevations (12) and/or depressions (13) extending in a circular manner.

9. Use of a casting mould according to any one of claims 1 to 8 in the execution of the RIM (reaction injection moulding) method of manufacturing foamed plastics sheaths.

## Revendications

1. Moule de coulée comprenant une partie supérieure (2) et une partie inférieure (3) pour la production d'enrobages de faisceaux de conducteurs (4), en particulier des enrobages en matière plastique ou en des matières similaires, destinés à des faisceaux de câbles, comportant, pour assurer l'étanchéité du faisceau de conducteurs (4) sortant, au moins une pièce intégrée (5) consistant en un matériau flexible, caractérisé par le fait que le matériau présente une dureté Shore comprise entre 60 et 90 à l'échelle A ; et par le fait que la pièce intégrée (5) est réalisée sous la forme d'un entonnoir (9) sur la (les) surface(s) marginale(s) interne(s) (8) tournée(s) vers le faisceau (4).

2. Moule de coulée selon la revendication 1, caractérisé par le fait que le matériau présente une faible propension à l'adhérence vis-à-vis dudit moule de coulée (1).

3. Moule de coulée selon la revendication 1 ou 2, caractérisé par le fait que la pièce intégrée (5) consiste en du silicone.

4. Moule de coulée selon l'une des revendications 1 à 3, caractérisé par le fait que la pièce intégrée (5) est mono-bloc.

5. Moule de coulée selon l'une des revendications 1 à 3, caractérisé par le fait que la pièce intégrée (5) est composée de deux moitiés identiques (5', 5'').

6. Moule de coulée selon l'une des revendications 1 à 5, caractérisé par le fait que la pièce intégrée (5) peut être insérée, par concordance de formes, dans un évidement (6') dudit moule de coulée (1).

7. Moule de coulée selon la revendication 6, caractérisé par le fait que la pièce intégrée (5) est de réalisation convexe sur les surfaces marginales externes (7) tournées vers ledit moule de coulée (1).

8. Moule de coulée selon l'une des revendications 1 à 7, caractérisé par le fait que la (les) surface(s) marginale(s) interne(s) (8) comporte(nt) des zones rehaussées (12) et/ou des zones renfoncées (13) s'étendant circulairement.

9. Utilisation d'un moule de coulée selon l'une des revendications 1 à 8, lors de la mise en oeuvre du procédé de moulage "par injection et réaction" pour la production d'enrobages en matières plastiques soumises à moussage.
